# EUROPEAN PATENT SPECIFICATION

(11) **EP 4 388 850 B1**
(45) Date of publication and mention of the grant of the patent: **22.10.2025**
(21) Application number: 22214768.8
(22) Date of filing: 19.12.2022
(51) Int. Cl.: A01D 34/23, A01D 41/14

(54) **A COMBINE HEADER COMPRISING A LATERAL CUTTING IMPLEMENT**
MÄHDRESCHERSCHNEIDWERK MIT SEITLICHEM SCHNEIDWERK
TÊTE DE MOISSONNEUSE-BATTEUSE COMPRENANT UN OUTIL DE COUPE LATÉRAL

(43) Date of publication of application: 26.06.2024
(73) Proprietor: CNH Industrial Belgium N.V., 8210 Zedelgem (BE)
(72) Inventor: Missotten, Bart M.A., 3020 Herent (BE); Reubens, Sam, 8200 Sint-Michiels (BE); Jongmans, Dré W.J., 4791 AG Klundert (NL); Van Overschelde, Pieter, 8200 Sint-Andries (BE); Vandergucht, Yvan C.C., 8647 Lo-Reninge (BE)
(74) Representative: CNH Industrial IP Department

(56) References cited:
- EP-A1- 2 647 276
- EP-A1- 3 607 811
- DE-A1- 102015 110 106
- FR-A1- 2 805 123

## Description

### Field of the Invention

The present invention is related to agricultural harvesters, in particular to a header for a combine harvester, and to the combine harvester equipped with such a header.

### State of the art.

A combine harvester includes a main self-propelled body mounted on four wheels and/or tracks and comprising an engine to drive the self-propelled movement of the harvester, and further comprising a feeder at the front of the harvester, a threshing system, a cleaning arrangement, a grain tank and a crop residue spreading apparatus. A removable header is attached at the front of the harvester, the header comprising movable knives at the front of a header table, a reel for guiding crops towards the knives, and transportation means such as an auger or a set of draper belts, to move the cut crops towards the centre of the header where the crops enter the feeder.

A new trend in agricultural is the integration of photovoltaic cell aggregates and other utilities in the field. The utilities are mounted on a support structure and placed sufficiently high above the ground so that combine harvesters are able to drive underneath them. To this aim, the support structure includes vertical poles mounted at regular distances in the field. However, these poles represent obstructions for the harvesters, so that crops grown in the immediate vicinity of the poles cannot be harvested.

DE 10 2015 110106 A1 describes an adapter for mounting a vertical cutting unit to a header with a swivel joint enabling to move the vertical cutting unit from a vertical working position towards the header into a transport position.

### Summary of the invention

The invention is related to a combine header and to a combine equipped therewith as described in the appended claims. The header and combine are configured to solve the above-described problems. The present invention is thus related to a combine header comprising the main components of a prior art header, including a header frame, a reel and a set of cutting knives, and further comprising a lateral cutting implement that is pivotably attached to one lateral end of the header frame. The implement is configured to cut crops in an area adjacent the main cutting area, and to pivot when an obstacle appears in said area, so that direct contact between the implement and the obstacle is avoided while enabling the harvesting of crops in said area, including in the direct vicinity of the obstacle.

The cutting implement comprises cutting knives for cutting crops in said area adjacent the main cutting area of the header, and gathering arms and retaining elements at the front side of the implement for transporting the crops towards the header frame. One or more transfer elements are provided on the header frame for transferring the crops from the implement to a position from where they can be gathered into the header frame by the reel. The gathering arms are preferably mounted on a belt-type carrier. The knives may also be mounted on a belt-type carrier, possibly driven by pulleys which are mounted on the same axles as the pulleys driving the belt-type arm carrier. The transfer elements may include a curved guiding plate mounted in a fixed position relative to the header frame.

### Brief description of the figures

Figures 1a and 1b are schematic top and front views of a self-propelled combine harvester, indicating a number of components of the machine, as known in the art.
Figure 2 is a schematic top view of the harvester equipped with a header in accordance with an embodiment of the invention.
Figures 3a to 3c illustrate the manner in which the lateral cutting implement is pivotable relative to the header frame when an obstacle appears in the path of the implement.
Figures 4a and 4b show details of the cutting implement according to an exemplary embodiment.
Figure 5 shows the cutting implement in detail, in an angular position relative to the header frame.
Figures 6a to 6c illustrate an embodiment wherein the implement is pivotable by mechanical means interacting with the obstacle.
Figure 7 illustrates an embodiment wherein the lateral cutting implement partially overlaps the cutterbar of the header.

### Detailed description of preferred embodiments of the invention

Preferred embodiments will now be described with reference to the drawings. The detailed description is not limiting the scope of the invention, which is defined only by the appended claims.

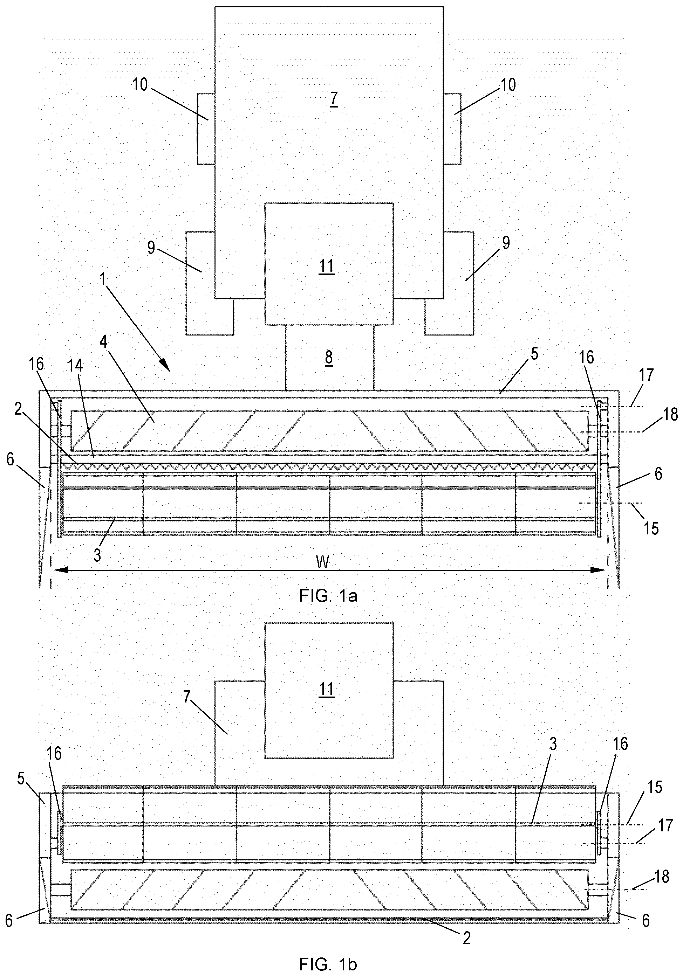

Figures 1a and 1b represent a combine harvester as known today, comprising a header 1 mounted at the front of the combine. The header 1 comprises a cutterbar 14 comprising knives 2 which are maintained at a given height above ground level while the combine moves through a field of crops that are to be harvested. A rotating reel 3 provided with tines (not shown) guides the crops towards the knives 2. Cut crops are transported from both lateral sides of the header 1 towards a central area by an auger 4. Instead of an auger, a set of draper belts may perform this function. The cutterbar 14, the reel 3 and the auger 4 are mounted on the header frame 5. Lateral dividers 6 extend forward from the front of the header frame 5 for defining a cutting area having a harvesting width W. From the central area of the header 1, crops are transported into the main body 7 of the combine by a feeder 8.

The main body 7 of the combine is supported by front and rear wheels 9 and 10 and comprises threshing and separation elements and a cleaning section generally known by the skilled reader and not depicted as such in Figure 1a. At the front of the main body 7 and placed above the header 1 is the operator's cabin 11.

The reel 3 is rotatable about a central rotation axis 15 and pivotable relative to the frame 5 between pivot arms 16 about a pivot axis 17. The auger 4 is rotatable about its central rotation axis 18. The knives 2 may be configured to undergo a reciprocating cutting movement with respect to a set of counterknives (not shown). Details about the knife drive and the actuation of the rotation of the reel 3 and the auger 4 are known as such and not represented in the simplified drawings in Figures 1a and 1b.

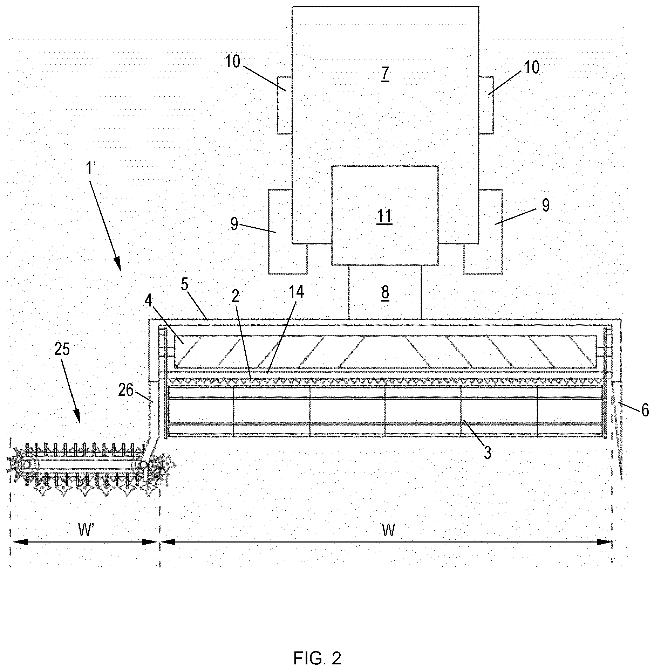

Figure 2 illustrates one embodiment of a combine harvester equipped with a header 1' in accordance with the invention. It is seen that the header 1' comprises a header frame 5 with a cutterbar 14 comprising knives 2, an auger 4 and a reel 3, as in the known configuration. In addition, the header 1' includes a lateral cutting implement 25 that is configured to cut crops from a strip of the field having a secondary harvesting width W. The strip lies adjacent to the main cutting area of width W. The implement 25 includes a set of knives and transport and retaining means for cutting crop stalks and moving the stalks in an essentially upright position towards the header frame 5. Transfer means then deliver the stalks to a position from where they can be gathered by the reel 3 and taken into the header frame 5 together with the stalks cut by the knives 2 of the cutterbar 14. Embodiments of the transport and retaining means and of the transfer means will be described in more detail further in this text.

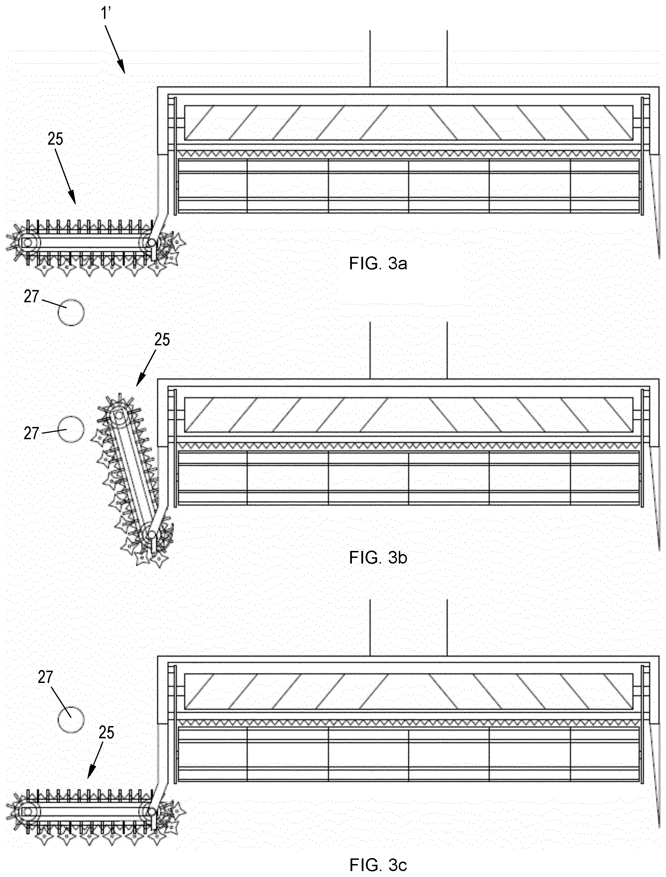

In the embodiment shown, the lateral cutting implement 25 is pivotably attached to the end of a support arm 26 that is fixed to the lateral end of the header frame 5 (where one of the lateral dividers 6 is removed), so that the implement 25 is capable of pivoting relative to the header frame 5, when an obstacle appears in the field. The pivoting movement is illustrated in Figures 3a to 3c. The obstacle 27 is a vertical pole, which may for example be a pole supporting a solar cell aggregate mounted above the field. Other examples of obstacles are for example : a fence post, a signpost, a utility pole for electricity and/or communication, a weather station, a beehive, a tree or tree stump, a shrub, a rock, an in situ man-made artefact, like a wall or pillar, an archaeological artefact like a menhir, dolmen or bunker remains. The obstacle can also be a certain area which is to be avoided, for example the place where a particular bird is nesting or the place where a dangerous object might be present, like a landmine or a piece of ammunition.

When the implement 25 approaches the pole 27, it is pivoted backwards to such a degree that a direct contact between the implement and the obstacle, for example the pole is avoided, as illustrated in Figure 3b. After passing the position of the pole, the implement is again pivoted forward to its initial position, as illustrated in Figure 3c. This configuration thereby enables harvesting crops in a strip of the field that comprises a row of spaced apart vertical obstacles.

The pivoting movement may be driven by an actuator not shown in the drawings but provided and mounted according to known technologies. The actuator may for example be an electric or hydraulic motor mounted on the support arm 26 or a variable length actuator coupled between the header frame 5 and the implement 25. The implement 25 may further comprise one or more sensors configured to detect an obstacle as the header 1' approaches the obstacle's position in the field. The sensor or sensors are coupled to a control unit incorporated in the implement, in the header or in the combine's main body, and configured to activate the actuator so that the implement 25 is pivoted backward in order to avoid a collision with the obstacle, and pivoted forward again after the obstacle has been passed. The sensors and the control unit are not shown and may be implemented according to known technologies. The sensors could for example be radar sensors, ultrasonic sensors, LIDAR sensors, optical sensors based on reflection or triangulation, camera or stereocamera sensors as known in the art. The control unit may be an electronic unit configured to receive signals from the sensors and send out control signals to the actuator on the basis of the received sensor signals. The position of the obstacle might also be known by its position, for example by using a map with the previously recorded position of the obstacle. When the combine harvester is equipped with a gps system or other positioning system, the relative position of the obstacle with respect to the combine harvester can then be determined.

One embodiment of the lateral cutting implement 25 is described hereafter in more detail. The invention is however not limited to this embodiment but encompasses other variants.

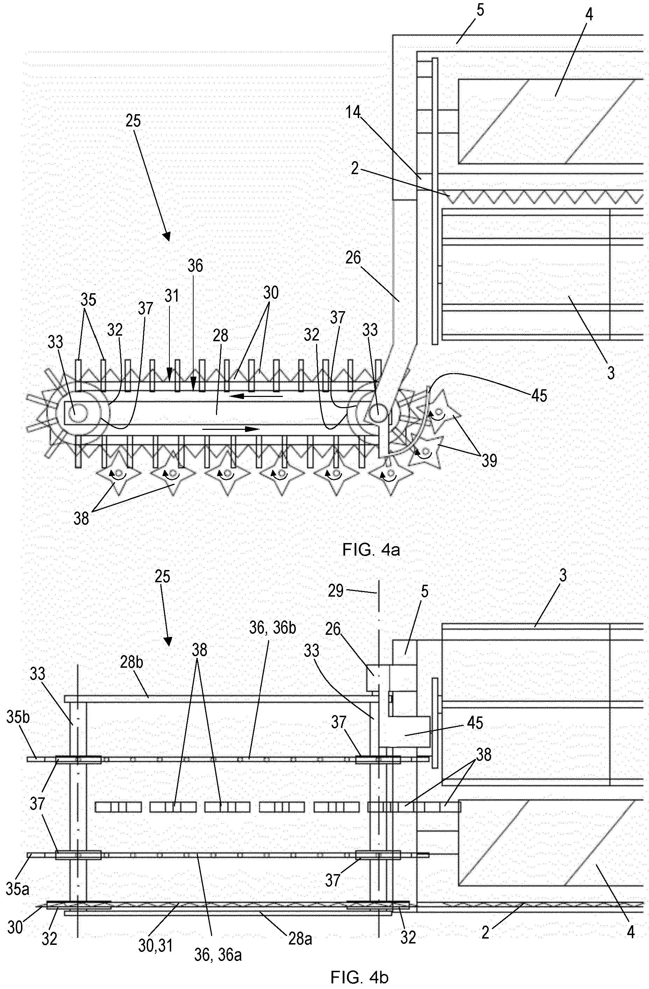

Figures 4a and 4b illustrate the implement 25 together with a portion of the standard header components such as the frame 5, reel 3, auger 4, and cutterbar 14, in a top and front view respectively. Apart from the support arm 26 and a transfer plate 45 attached to it (and described later), all the components are shown in transparent view. It is seen that the implement comprises a support frame 28 that is pivotably coupled to the support arm 26 so that the entire implement is pivotable about an essentially vertical axis 29. The support frame 28 is shown schematically in the front view by bottom and top beams 28a and 28b. These beams may be connected together by suitable connection elements not represented in the drawings, such as a vertical wall or shielding plate along the front and/or the back of the implement.

In the embodiment shown, the cutting implement 25 comprises a belt cutter, provided with knives 30 mounted on a continuously moving belt-type carrier 31. The knives move along the front side of the implement in the direction of the header frame 5 and along the back side in the opposite direction, as indicated by the arrows. At the front side, the knives 30 move relative to counterknives (not shown) which are stationary with respect to the support frame 28, in order to cut crops standing in the path of the implement. The carrier 31 is guided by a pair of pulleys 32 fixed to a pair of vertical rotatable axles 33, one of which is actively rotated at a given speed by a suitable actuator such as a hydraulic or electric motor (not shown). The knives 30 are placed approximately at the same height as the reciprocating knives 2 mounted on the cutterbar 14.

The implement 25 further comprises two sets of gathering arms 35, shown in the front view as a lower set 35a and an upper set 35b, placed respectively about half-way along the height of the lower and the upper half of the implement 25. The gathering arms 35a/35b are attached to further belt-type carriers 36 which are driven by pulleys 37 mounted on the same axles 33 as the pulleys 32. The gathering arms 35 thereby move at the same speed as the knives 30 and in the same direction. According to other embodiments, the actuation means of the knives 30 and the arms 35 are not coupled so that the arms and the knives can move at different speeds, and/or in opposite directions, with the knives 30 moving away from the header frame 5 at the front side of the implement 25, while the arms 35 move towards the header frame at said front side.

A row of star-shaped rotor elements 38 having a crop-retaining function are furthermore rotatably mounted on the support frame 28, at the front side of the belt-type carriers. These rotor elements 38 are rotatable about axles (not shown) which are in a fixed position relative to the support frame 28, i.e. mounted thereon by suitable mechanical means such as brackets or the like. These details are however not shown in order not to complicate the drawings, which are intended primarily to illustrate the function of the various constituent elements.

The rotor elements 38 are preferably rotated actively in the direction indicated by the arrows, or alternatively they could be passively rotated by the passage of the crops. Two additional star-shaped rotor elements 39 are placed along a first portion of the semi-circular return path of the knives 30 and the gathering arms 35 around the pivot axis 29. As seen in the front view in Figure 4b, the rotor elements 38,39 are placed about half-way along the height of the implement 25, at the same distance from the two arm carriers 36a and 36b.

When the implement 25 moves forward through a field of crops, the knives 30 cut the crops near ground level. The gathering arms 35 subsequently maintain the crop stalks in an approximately upright position, while the rotor elements 38,39 prevent the stalks from falling away from the implement. In this way, the gathering arms 35 and the rotor elements 38/39 together realize the transportation of the stalks in the direction of the header frame 5. According to other embodiments, the gathering arms are themselves provided with retaining means such as hooks or the like, so that no separate retaining elements are included in the cutting implement. When the stalks reach the end of the implement, they need to be delivered at a position from where they can be collected by the reel 3 into the main header frame 5.

To this aim, a curved transfer plate 45 is provided. The transfer plate is uniform with or fixed to the support arm 26, i.e. the transfer plate 45 is not pivotable relative to the support arm 26. The position of the guide 45 plate relative to the knives 30, the gathering arms 35 and the last rotor elements 39 is such that the transfer plate 45 causes the stalks to move away from the gathering arms 35. While making the half-turn along the transfer plate 45, the stalks are still supported by the two additional rotor elements 39. Beyond these rotor elements 39, the stalks are released at a suitable location for being collected into the header frame.

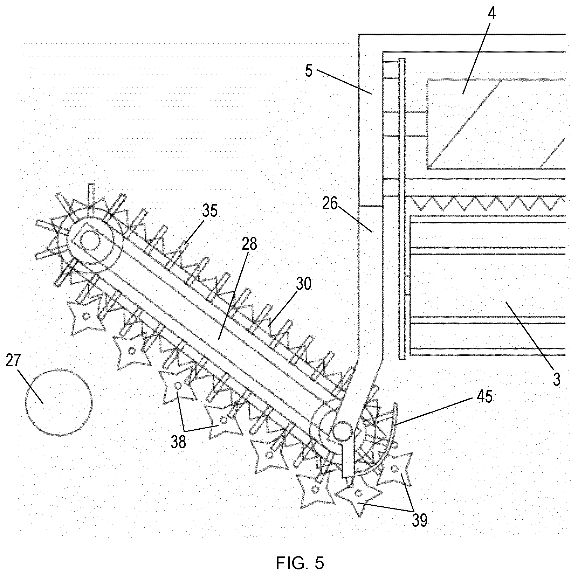

This delivery mechanism functions not only at the first position of the implement, with the knives 30 parallel to the cutterbar 14, as shown in Figures 4a and 4b, but also when the implement is in an angular position relative to the header, as illustrated in Figure 5. In other words, crops continue to be cut and collected, even while the implement 25 is pivoted backwards for avoiding an obstacle 27, and while the implement 25 is pivoted forward again after passing the obstacle. The exact shape and size of the transfer plate 45, the position and shape of the rotor elements 38/39 and other parameters of the implement may be different from the illustrations which are merely illustrating the functionality of these components. Such variations may have an influence also on the position of the pivot axis 29 and the shape of the support arm 26. Said support arm 26 may be replaced by a more robust support structure connected not only at an upper area of the header frame, but also at the bottom thereof.

Figure 5 illustrates that the delivery of the stalks cut by the implement 25 to the header frame is enabled by the functionality of the guiding plate 45, when the implement is oriented at an oblique angle with respect to the header frame. According to preferred embodiments, said delivery is enabled within the full angular range of the implement. According to other embodiments, the angular range within which the delivery is enabled may be smaller than the full angular range, while still allowing the majority of crops in the area adjacent the primary harvesting width W to be harvested. In general, any lateral cutting implement according to the invention enables cutting and harvesting crops in said adjacent area within a given angular range of the implement.

In the language of the appended claims, the implement is configured to cut crops in the area adjacent the primary harvesting width when the implement is in a first angular position. This first angular position is preferably the position wherein the implement is essentially parallel to the knives 2 mounted in the header frame, as illustrated in Figure 2, but the first angular position could also be another angular position.

The implement 25 is not limited to an implement comprising a belt cutter. The implement could instead be provided with a cutterbar equipped with reciprocating knives, combined with a belt-driven set of gathering arms 35 and with the retaining rotor elements 38,39. In the case of reciprocating knives, this may be realized as a knives reciprocating relative to stationary counterknives, or as two sets of knives reciprocating across each other in opposite directions.

Instead of the single transfer plate 45, multiple similarly curved transfer plates could be mounted at various heights along the pivot axis 29, at positions where the plates do not interfere with the movements of the knives 30, the gathering arms 35 and the retaining rotor elements 38,39. The single or multiple transfer plates 45 represent possible embodiments of the 'one or more transfer elements' referred to in appended claim 1. The transfer of the crops could be realized by other transfer elements instead of plates, for example bars or gratings.

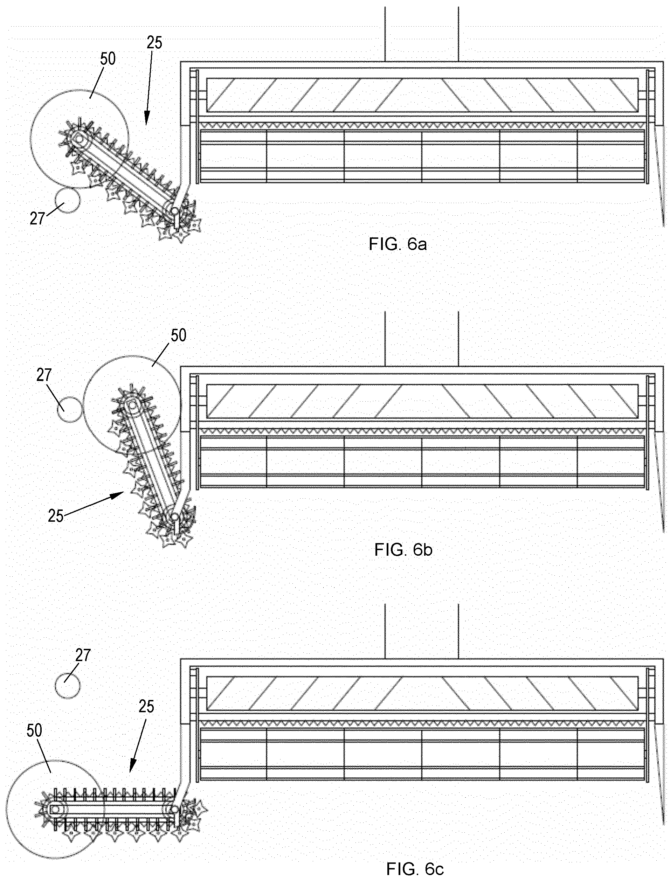

Figure 6 illustrates the principle of a cutting implement 25 in accordance with the invention, that is actuated through the mechanical interaction between the implement and the obstacle. In the embodiment shown, the implement comprises a disc 50, preferably formed of flexible material, such as a rubber tire, that is rotatably mounted on the implement, preferably being rotatable about the same rotation axis as the outer pulleys of the belt cutter 30,31 and/or the gathering arms 35. The diameter of the disc 50 is such that when the implement is driven towards the pole 27, the disc enters into contact with the pole and the reaction force actuates the angular movement of the implement 25, as illustrated in Figure 6b. A spring mechanism (not shown) is installed between the implement 25 and the header frame 5. The spring mechanism is configured so that the spring force actuates the return movement of the implement 25 towards its standard position, after passing the obstacle, as illustrated in Figure 6c. Instead of a disc or tire 50, any other suitably shaped buffer element, for example a ridge-shaped element may be used that performs the same function as the disc 50, i.e. to interact with the obstacle before the knives are able to come into contact with said obstacle, by folding the cutting implement backwards through said interaction.

A header according to the invention may be provided with one cutting implement 25 on one side of the header frame 5, or with two cutting implements 25, one on each side, and which may be implemented as mirror images of each other relative to the header's centre line. Alternatively, different variations of the cutting implement could be provided on both sides, for example having different cutting lengths.

According to preferred embodiments, the lateral cutting implement according to any embodiment of the invention is not permanently attached to the header frame, but is detachable therefrom, so that harvesting is possible either with or without the implement attached, and/or so that header transport is facilitated. The invention is therefore related also to the implement as such.

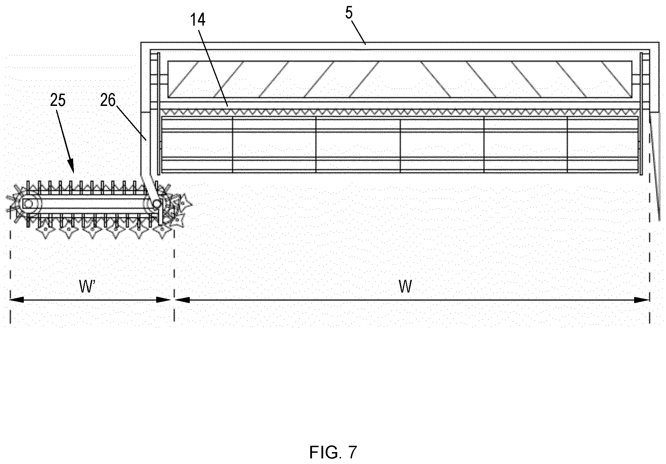

In the embodiment shown, the cutting width of the implement 25 is adjacent the cutting width of the primary cutterbar 14. This means that the primary and secondary harvesting widths W and W' are determined respectively by the width of the cutterbar 14 and the cutting width of the implement 25. According to other embodiments, the cutting width of the implement 25 may partly overlap the cutterbar, as illustrated in Figure 7. The end of the support arm 26 is bent slightly inward rather than outward as in the previous embodiments. Such an embodiment still falls under the scope of appended claim 1. In this case, and as illustrated in Figure 7, the 'primary harvesting width' W is somewhat smaller than the width of the cutterbar 14, while the 'second harvesting width W, adjacent the primary width' is determined by the cutting width of the lateral cutting implement 25.

According to an embodiment, the header comprises a sensor that measures the relative position of the lateral cutting implement with respect to the header frame, for example a sensor that measures the angle between the lateral cutting implement and the header frame. This enables to keep track of the harvested area, for example by recording the swept area by the header frame and the lateral cutting implement.

Instead of said position sensor or in addition thereto, the header may comprise a sensor for measuring the torque acting on the lateral cutting implement. This may be for example a sensor mounted on the pivot axle of the implement.

The output of the position sensor and/or the torque sensor can be used as a measure of the amount of crop that is being collected by the implement, which may be used to adjust one or more settings of the harvester as a whole. A suitably programmed control unit may be implemented in the harvester for performing such adjustments. When the lateral cutting implement is bringing in more crop, the settings of the header can be adapted, for example by increasing the auger and/or draper speed and/or for example by adapting the settings for the threshing and cleaning sections to better deal with the increased amount of crop. Additionally, the different left/right intake distribution of crop can be taken into account to adapt settings, for example by applying different threshing settings left and right in a dual rotor axial combine and/or different cleaning settings left and right.

According to an embodiment of a harvester according to the invention, i.e. equipped with a header comprising a lateral cutting implement, the operator may be provided with a visual indication of the implement's position. This may be done via the user interface in the cabin which may show the header and the lateral cutting implement in the actual position, for example in a top view, so that the operator can easily follow up the actual position of header and lateral cutting implement.

## Claims

1. A combine header (1') comprising a header frame (5), a rotatable reel (3) and a plurality of knives (2) arranged between a first and second lateral end of the header frame (5), for cutting crops along a primary harvesting width (W), when the header is driven through said crops in a driving direction oriented essentially transversely with respect to said primary harvesting width (W), the header further comprising a cutting implement (25) that is pivotably attached to a lateral end of the header frame (5) and comprising:
- a support frame (28) having a proximal end and a distal end,
- a row of additional cutting knives (30) configured to perform a cutting movement relative to the support frame,
**characterized in that** :
- the cutting implement (25) is configured to cut crops along a secondary harvesting width (W') adjacent the primary harvesting width (W), when the cutting implement (25) is maintained in a first angular position,
- the cutting implement (25) further comprises gathering arms (35) which are movable from the distal end of the support frame (28) to the proximal end at the front side of the cutting implement (25), for guiding the crops, which have been cut by the additional knives (30), towards the lateral end of the header frame (5) to which the implement (25) is attached,
- the header (1') comprises one or more transfer elements (45) for transferring the crops from the cutting implement (25) to a position from where the crops can be gathered into the header frame (5) by the rotatable reel (3),
- the cutting implement (25) is pivotable from the first angular position to a second angular position about an essentially vertical axis (29) located in a fixed position relative to the header frame (5), thereby enabling the implement to avoid colliding with obstacles (27) in said secondary harvesting width (W) adjacent the primary harvesting width (W), and
- the one or more transfer elements (45) enable said transfer regardless of the angular position of the implement (25), within a given angular range.

2. The header according to claim 1, wherein the implement (25) comprises at least one belt-type arm carrier (36a,36b) to which the gathering arms (35) are attached, and at least one pair of pulleys (37) for guiding the movement of the arm carrier or carriers.

3. The header according to claim 1 or 2, wherein the implement comprises a belt-type knife carrier (31) to which the additional cutting knives (30) are attached, and a pair of pulleys (32) for driving and guiding the movement of the knife carrier.

4. The header according to any one of the preceding claims, wherein the cutting implement (25) further comprises retaining elements (38,39) mounted at the front side of the implement and positioned at a height configured so that crop stalks which are cut by the additional knives (30) and guided by the gathering arms (35) are retained before being transferred to the header frame (5).

5. **The** header according to claim 4, wherein the retaining elements are rotor elements (38,39) which are rotatable about axes that are in a fixed position relative to the support frame (28).

6. The header according to any one of the preceding claims, wherein the transfer elements include at least one curved transfer plate (45) mounted in a position that is fixed with respect to the header frame (5), with a curvature configured to guide crop stalks which have been cut by the additional knives (30) and transported and retained by the gathering arms (35) and retaining rotor elements (38,39), away from said gathering arms (35) and towards a position from where the stalks can be gathered into the header frame (5) by the rotatable reel (3).

7. **The** header according to any one of the preceding claims, comprising a support arm (26) attached to said lateral end of the header frame (5) in a fixed position relative to said header frame, and wherein the support frame (28) of the cutting implement (25) is pivotably attached to said support arm (26).

8. The header according to any one of the preceding claims, wherein :
- the implement (25) comprises a buffer device (50) configured to come into physical contact with a vertical obstacle (27) when the implement is in the first angular position, so that the implement moves from said first angular position to said second angular position through the interaction between the buffer device (50) and the obstacle (27),
- the header comprises a spring mechanism configured to return the implement (25) to the first angular position after passing the obstacle (27).

9. The header according to claim 8, wherein said buffer device is a disc (50) mounted at the distal end of the support frame (28).

10. The header according to any one of claims 1 to 7, comprising at least one actuator for actively moving the implement (25) to the second angular position and back.

11. The header according to claim 10, comprising one or more sensors configured to detect an obstacle (27), and a control unit coupled to said one or more actuators and configured to actuate the movement of the implement (25) to the second angular position when the obstacle is detected by the one or more sensors.

12. A combine harvester comprising a header in accordance with any one of the preceding claims.

13. A combine harvester according to claim 12, wherein the header (1') comprises a sensor for measuring the position of the lateral cutting implement (25) relative to the header frame (5) and/or a sensor for measuring the torque acting on the lateral cutting implement (25), and wherein the harvester comprises a control unit configured to adjust one or more settings of the harvester based on the output of said position sensor and/or said torque sensor.

14. A combine harvester according to claim 12 or 13, comprising a user interface configured to provide information about the harvester to an operator of the harvester, wherein said interface is configured to provide a visual indication of the position of the lateral implement (25).

## Patentansprüche

1. Mähdreschervorsatz (1') mit einem Vorsatzrahmen (5), einer drehbaren Einzugstrommel (3) und einer Mehrzahl von Messern (2), die zwischen einem ersten und einem zweiten seitlichen Ende des Vorsatzrahmens (5) angeordnet sind, zum Schneiden von Erntegut entlang einer primären Erntebreite (W), wenn der Vorsatz durch das Erntegut in einer im Wesentlichen quer zu der primären Erntebreite (W) orientierten Fahrtrichtung gefahren wird, wobei der Vorsatz des Weiteren eine Schneidvorrichtung (25) aufweist, die schwenkbar an einem seitlichen Ende des Vorsatzrahmens (5) angebracht ist und aufweist:
- einen Tragrahmen (28) mit einem proximalen Ende und einem distalen Ende,
- eine Reihe zusätzlicher Schneidmesser (30), die dazu eingerichtet sind, eine Schneidbewegung relativ zu dem Tragrahmen auszuführen,
**dadurch gekennzeichnet, dass**:
- die Schneidvorrichtung (25) dazu eingerichtet ist, Erntegut entlang einer sekundären Erntebreite (W) benachbart zu der primären Erntebreite (W) zu schneiden, wenn sich die Schneidvorrichtung (25) in einer ersten Winkelstellung befindet,
- die Schneidvorrichtung (25) des Weiteren Einzugsarme (35) aufweist, die von dem distalen Ende des Tragrahmens (28) zu dem proximalen Ende an der Vorderseite der Schneidvorrichtung (25) bewegbar sind, zum Führen des Ernteguts, das von den zusätzlichen Messern (30) geschnitten worden ist, zu dem seitlichen Ende des Vorsatzrahmens (5), an dem die Vorrichtung (25) angebracht ist,
- der Vorsatz (1') ein oder mehrere Übergabeelemente (45) aufweist, um das Erntegut von der Schneidvorrichtung (25) zu einer Position zu überführen, von der aus das Erntegut durch die drehbare Einzugstrommel (3) in den Vorsatzrahmen (5) eingezogen werden kann,
- die Schneidvorrichtung (25) um eine im Wesentlichen vertikale Achse (29), die sich in einer festen Position relativ zu dem Vorsatzrahmen (5) befindet, von der ersten Winkelstellung in eine zweite Winkelstellung verschwenkbar ist, wodurch die Vorrichtung in die Lage versetzt wird, ein Zusammenstoßen mit Hindernissen (27) in der sekundären Erntebreite (W) benachbart zur primären Erntebreite (W) zu vermeiden, und
- das eine oder die mehreren Übergabeelemente (45) das Überführen unabhängig von der Winkelstellung der Vorrichtung (25) innerhalb eines vorgegebenen Winkelbereichs ermöglichen.

2. Vorsatz nach Anspruch 1, wobei die Vorrichtung (25) mindestens einen gurtartigen Armträger (36a, 36b), an dem die Einzugsarme (35) angebracht sind, und mindestens ein Paar Umlenkrollen (37) zum Führen der Bewegung des oder der Armträger aufweist.

3. Vorsatz nach Anspruch 1 oder 2, wobei die Vorrichtung einen gurtartigen Messerträger (31), an dem die zusätzlichen Schneidmesser (30) angebracht sind, und ein Paar Umlenkrollen (32) zum Antreiben und Führen der Bewegung des Messerträgers aufweist.

4. Vorsatz nach einem der vorhergehenden Ansprüche, wobei die Schneidvorrichtung (25) des Weiteren Halteelemente (38, 39) aufweist, die an der Vorderseite der Vorrichtung angebracht und in einer Höhe positioniert sind, die dazu eingerichtet ist, Halme, die von den zusätzlichen Messern (30) geschnitten und von den Einzugsarmen (35) geführt worden sind, zurückzuhalten, bevor sie zu dem Vorsatzrahmen (5) überführt werden.

5. Vorsatz nach Anspruch 4, wobei die Halteelemente Rotorelemente (38, 39) sind, die um Achsen drehbar sind, die sich in einer festen Position relativ zu dem Tragrahmen (28) befinden.

6. Vorsatz nach einem der vorhergehenden Ansprüche, wobei die Übergabeelemente mindestens eine gekrümmte Übergabeplatte (45) umfassen, die in einer festen Position relativ zu dem Vorsatzrahmen (5) angebracht ist, mit einer Krümmung, die dazu eingerichtet ist, Halme, die von den zusätzlichen Schneidmessern (30) geschnitten und von den Einzugsarmen (35) und den Halterotorelementen (38, 39) transportiert und gehalten worden sind, von den Einzugsarmen (35) weg und zu einer Position zu führen, von der aus die Halme durch die drehbare Einzugstrommel (3) in den Vorsatzrahmen (5) eingezogen werden können.

7. Vorsatz nach einem der vorhergehenden Ansprüche, der einen Tragarm (26) aufweist, der an dem seitlichen Ende des Vorsatzrahmens (5) in einer festen Position relativ zu dem Vorsatzrahmen angebracht ist, und wobei der Tragrahmen (28) der Schneidvorrichtung (25) schwenkbar an dem Tragarm (26) angebracht ist.

8. Vorsatz nach einem der vorhergehenden Ansprüche, wobei:
- die Vorrichtung (25) eine Puffervorrichtung (50) aufweist, die dazu eingerichtet ist, mit einem vertikalen Hindernis (27) in physischen Kontakt zu kommen, wenn sich die Vorrichtung in der ersten Winkelstellung befindet, so dass sich die Vorrichtung von der ersten Winkelstellung in die zweite Winkelstellung durch die Wechselwirkung zwischen der Puffervorrichtung (50) und dem Hindernis (27) bewegt,
- der Vorsatz einen Federmechanismus aufweist, der dazu eingerichtet ist, die Vorrichtung (25) nach Passieren des Hindernisses (27) in die erste Winkelstellung zurückzuführen.

9. Vorsatz nach Anspruch 8, wobei die Puffervorrichtung eine Scheibe (50) ist, die an dem distalen Ende des Tragrahmens (28) angebracht ist.

10. Vorsatz nach einem der Ansprüche 1 bis 7, die mindestens eine Betätigungseinrichtung zum aktiven Bewegen der Vorrichtung (25) in die zweite Winkelstellung und zurück aufweist.

11. Vorsatz nach Anspruch 10, die einen oder mehrere Sensoren, die dazu eingerichtet sind, ein Hindernis (27) zu erfassen, und eine Steuereinheit aufweist, die mit dem einen oder den mehreren Sensor(en) gekoppelt und dazu eingerichtet ist, die Bewegung der Vorrichtung (25) in die zweite Winkelstellung zu veranlassen, wenn das Hindernis durch den oder die Sensor(en) erfasst wird.

12. Mähdrescher, der einen Vorsatz nach einem der vorhergehenden Ansprüche aufweist.

13. Mähdrescher nach Anspruch 12, wobei der Vorsatz (T) einen Sensor zum Messen der Position der seitlichen Schneidvorrichtung (25) relativ zu dem Vorsatzrahmen (5) und/oder einen Sensor zum Messen des auf die seitliche Schneidvorrichtung (25) wirkenden Drehmoments aufweist, und wobei der Mähdrescher eine Steuereinheit aufweist, die dazu eingerichtet ist, eine oder mehrere Einstellungen des Mähdreschers basierend auf der Ausgabe des Positionssensors und/oder des Drehmomentsensors anzupassen.

14. Mähdrescher nach Anspruch 12 oder 13, die eine Benutzerschnittstelle aufweist, die dazu eingerichtet ist, einer Bedienperson des Mähdreschers Informationen über den Mähdrescher bereitzustellen, wobei die Schnittstelle dazu eingerichtet ist, eine visuelle Anzeige der Position der seitlichen Vorrichtung (25) bereitzustellen.

## Revendications

1. Un organe de coupe de moissonneuse-batteuse (1') comprenant un châssis d'organe de coupe (5), un rabatteur rotatif (3) et une pluralité de couteaux (2) disposés entre une première et une seconde extrémité latérale du châssis d'organe de coupe (5), pour la coupe des récoltes le long d'une largeur de récolte principale (W), lorsque l'organe de coupe est conduit à travers lesdites récoltes dans une direction de conduite orientée essentiellement transversalement par rapport à ladite largeur de récolte principale (W), l'organe de coupe comprenant en outre un outil de coupe (25) qui est attaché de manière pivotante à une extrémité latérale du châssis d'organe de coupe (5) et comprenant :
- un châssis support (28) ayant une extrémité proximale et une extrémité distale,
- une rangée de couteaux de coupe supplémentaires (30) configurés pour effectuer un mouvement de coupe par rapport au châssis support,
**caractérisé en ce que** :
- l'outil de coupe (25) est configuré pour couper les récoltes le long d'une largeur de récolte secondaire (W') adjacente à la largeur de récolte principale (W), lorsque l'outil de coupe (25) est maintenu dans une première position angulaire,
- l'outil de coupe (25) comprend en outre des bras collecteurs (35) qui sont mobiles entre l'extrémité distale du châssis support (28) et l'extrémité proximale à l'avant de l'outil de coupe (25), pour guider les récoltes, qui ont été coupées par les couteaux supplémentaires (30), vers l'extrémité latérale du châssis d'organe de coupe (5) auquel l'outil (25) est fixé,
- l'organe de coupe (1') comprend un ou plusieurs éléments de transfert (45) pour transférer les récoltes de l'outil de coupe (25) vers une position à partir de laquelle les récoltes peuvent être collectées dans le châssis d'organe de coupe (5) par le rabatteur rotatif (3),
- l'outil de coupe (25) peut pivoter d'une première position angulaire à une seconde position angulaire autour d'un axe essentiellement vertical (29) situé dans une position fixe par rapport au châssis d'organe de coupe (5), ce qui permet ainsi à l'outil d'éviter de heurter des obstacles (27) dans ladite largeur de récolte secondaire (W') adjacente à la largeur de récolte principale (W), et
- le ou les éléments de transfert (45) permettent ledit transfert quelle que soit la position angulaire de l'outil (25), dans une plage angulaire donnée.

2. L'organe de coupe selon la revendication 1, dans laquelle l'outil (25) comprend au moins un support de bras de type courroie (36a, 36b) auquel les bras collecteurs (35) sont fixés, et au moins une paire de poulies (37) pour guider le mouvement du ou des supports de bras.

3. L'organe de coupe selon la revendication 1 ou la revendication 2, dans lequel l'outil comprend un support de couteaux de type courroie (31) auquel sont fixés les couteaux de coupe supplémentaires (30), et une paire de poulies (32) pour conduire et guider le mouvement du support de couteaux.

4. L'organe de coupe selon l'une quelconque des revendications précédentes, dans laquelle l'outil de coupe (25) comprend en outre des éléments de retenue (38, 39) montés à l'avant de l'outil et positionnés à une hauteur configurée de sorte que les tiges de récolte qui sont coupées par les couteaux supplémentaires (30) et guidées par les bras collecteurs (35) sont retenues avant d'être transférées vers le châssis d'organe de coupe (5).

5. L'organe de coupe selon la revendication 4, dans laquelle les éléments de retenue sont des éléments rotatifs (38, 39) qui peuvent tourner autour d'axes qui sont dans une position fixe par rapport au châssis support (28).

6. L'organe de coupe selon l'une quelconque des revendications précédentes, dans lequel les éléments de transfert incluent au moins une plaque de transfert incurvée (45) montée dans une position fixe par rapport au châssis d'organe de coupe (5), avec une courbure configurée pour guider les tiges de récolte qui ont été coupées par les couteaux supplémentaires (30) et transportées et retenues par les bras collecteurs (35) et les éléments rotatifs de retenue (38, 39), loin desdits bras collecteurs (35) et vers une position à partir de laquelle les tiges peuvent être collectées dans le châssis d'organe de coupe (5) par le rabatteur rotatif (3).

7. L'organe de coupe selon l'une quelconque des revendications précédentes, comprenant un bras de soutien (26) fixé à ladite extrémité latérale du châssis d'organe de coupe (5) dans une position fixe par rapport audit châssis d'organe de coupe, et dans lequel le châssis support (28) de l'outil de coupe (25) est fixé de manière pivotante audit bras de soutien (26).

8. L'organe de coupe selon l'une quelconque des revendications précédentes, dans lequel
- l'outil (25) comprend un dispositif tampon (50) configuré pour entrer en contact physique avec un obstacle vertical (27) lorsque l'outil se trouve dans la première position angulaire, de sorte que l'outil se déplace de ladite première position angulaire vers ladite seconde position angulaire grâce à l'interaction entre le dispositif tampon (50) et l'obstacle (27),
- l'organe de coupe comprend un mécanisme à ressort configuré pour ramener l'outil (25) dans la première position angulaire après avoir franchi l'obstacle (27).

9. L'organe de coupe selon la revendication 8, dans lequel ledit dispositif tampon est un disque (50) monté à l'extrémité distale du châssis support (28).

10. L'organe de coupe selon l'une quelconque des revendications 1 à 7, comprenant au moins un actionneur pour déplacer activement l'outil (25) vers la seconde position angulaire et inversement.

11. L'organe de coupe selon la revendication 10, comprenant un ou plusieurs capteurs configurés pour détecter un obstacle (27), et une unité de commande couplée audit ou auxdits actionneurs et configurée pour actionner le déplacement de l'outil (25) vers la seconde position angulaire lorsque l'obstacle est détecté par le ou les capteurs.

12. Une moissonneuse-batteuse comprenant un organe de coupe selon l'une quelconque des revendications précédentes.

13. Une moissonneuse-batteuse selon la revendication 12, dans laquelle l'organe de coupe (1') comprend un capteur pour mesurer la position de l'outil de coupe latéral (25) par rapport au châssis d'organe de coupe (5) et/ou un capteur pour mesurer le couple agissant sur l'outil de coupe latéral (25), et dans laquelle la moissonneuse comprend une unité de commande configurée pour ajuster un ou plusieurs réglages de la moissonneuse en fonction de la sortie dudit capteur de position et/ou dudit capteur de couple.

14. Une moissonneuse-batteuse selon la revendication 12 ou la revendication 13, comprenant une interface utilisateur configurée pour fournir des informations concernant la moissonneuse à un opérateur de la moissonneuse, dans laquelle ladite interface est configurée pour fournir une indication visuelle de la position de l'outil latéral (25).
